Europäisches Patentamt

European Patent Office

Office européen des brevets

(19)

(11) Numéro de publication : **0 082 279**
**B1**

(12) **FASCICULE DE BREVET EUROPÉEN**

(45) Date de publication du fascicule du brevet :
05.03.86

(51) Int. Cl.⁴ : **C 21 B   3/08**

(21) Numéro de dépôt : **82110199.5**

(22) Date de dépôt : **05.11.82**

(54) Procédé et installation de granulation de laitier.

(30) Priorité : 18.11.81 LU 83768

(43) Date de publication de la demande :
29.06.83 Bulletin 83/26

(45) Mention de la délivrance du brevet :
05.03.86 Bulletin 86/10

(84) Etats contractants désignés :
**AT BE DE FR GB IT NL SE**

(56) Documents cités :
DE-B- 2 525 186
FR-A- 1 494 437
LU-A-    82 585
US-A- 4 204 855
Patent Abstracts of Japan, vol. 2, no. 122, 13 October
1978, page 2415c78

(73) Titulaire : **PAUL WURTH S.A.**
**32 rue d'Alsace**
**L-1122 Luxembourg (LU)**

(72) Inventeur : **Monteyne, Guido**
**28 Beukenlaan**
**B-9971 Lembeke (BE)**
Inventeur : **Calmes, Marc**
**59 bd. Prince Félix**
**Luxembourg (LU)**
Inventeur : **Schmeler, Robert**
**13 Biergstross**
**Dalheim (LU)**

(74) Mandataire : **Meyers, Ernest et al**
**Office de Brevets Freylinger & Associés 46 rue du**
**Cimetière B.P. 1153**
**L-1011 Luxembourg (LU)**

Jouve, 18, rue St-Denis, 75001 Paris, France

## Description

La présente invention concerne un procédé de granulation liquide de laitier, consistant à faire tomber le laitier en fusion dans une enceinte de granulation dans laquelle on injecte de l'eau sous pression, sous forme de plusieurs courants superposés et duquel on évacue la pulpe composée de laitier granulé et d'eau vers une installation de filtration et séparation d'eau du laitier granulé, cette installation comprenant un tambour filtrant rotatif tournant autour d'un axe horizontal garni intérieurement de godets de filtration plongeant, lors de la rotation du tambour dans la pulpe et entraînant le laitier granulé vers le sommet pour le déverser sur une bande d'évacuation.

L'invention concerne également une installation pour la mise en œuvre de ce procédé.

Quoique n'y étant pas limitée, l'invention concerne plus particulièrement la granulation du laitier de haut fourneau. Dans ce domaine, comme dans d'autres, il existe, plus que jamais, une tendance à réaliser des économies d'énergie et de matières premières. La demande de brevet EP-A N° 0 043 605 a déjà permis de réaliser des progrès sensibles dans ce sens par le fait qu'elle propose une séparation des deux fonctions essentielles de l'eau, à savoir la granulation et l'évacuation du laitier et qu'elle propose à cet effet d'injecter l'eau dans l'espace de granulation sous forme de deux courants superposés et indépendants. Cette conception permet, notamment, de prévoir des pressions et des températures différentes pour les deux courants.

Toutefois, même si cette demande de brevet permet une diminution sensible de la consommation en eau, le débit total reste néanmoins constant et est déterminé de manière à suffire pour la granulation d'un débit maximal de laitier. En effet, l'on sait que le débit du courant de laitier en fusion qui sort du haut fourneau par exemple, n'est pas constant dans le temps et peut doubler, dans le temps, par rapport à une valeur moyenne. Malheureusement, jusqu'à présent, il n'était pas possible, ou souhaitable, d'adapter le débit de l'eau de granulation à celle du laitier en fusion ceci pour plusieurs raisons essentielles. L'une de ces raisons est que, dans la plupart des cas, même si on constate que le débit du laitier varie, il n'est pas possible de mesurer exactement ces variations de débit.

L'autre raison est que, si l'on veut modifier le débit de l'eau passant à travers un orifice donné, on doit modifier sa pression, et ceci de manière sensible, car l'on sait que la pression est une fonction quadratique du débit. Ceci signifie que, si l'on augmente le débit à partir d'une valeur moyenne, il faut augmenter considérablement la pression, de sorte que l'économie apparente en eau de granulation est plus qu'annulée par les besoins supplémentaires en énergie pour faire fonctionner les pompes. De façon analogue, si l'on réduit le débit par rapport à une valeur moyenne, la pression n'est plus suffisante pour l'entretien du processus de granulation et l'évacuation du laitier.

D'un autre côté, si l'on maintient le débit de l'eau de granulation à une valeur correspondant à un débit moyen du laitier à granuler, celui-ci sera insuffisamment granulé et refroidi lorsque son débit augmente. Par conséquent, pour assurer, en tout cas, une granulation et un refroidissement suffisants du laitier, on détermine le débit du ou des courants d'eau de manière qu'il soit suffisant pour pouvoir granuler et refroidir correctement le laitier lorsque son débit est maximal. L'inconvénient qui en résulte est bien entendu que, chaque fois que le laitier en fusion n'est pas à son débit maximal, on injecte trop d'eau de granulation. Ceci signifie que, non seulement on réalise un gaspillage, mais également qu'on complique la filtration ultérieure, étant donné qu'il faut à nouveau séparer l'eau du laitier granulé pour disposer d'un laitier utilisable. En même temps, on effectue un gaspillage d'énergie, étant donné qu'il faut alimenter les pompes pour amener de l'eau de granulation qui, normalement, ne serait pas nécessaire. Ces considérations sont aussi valables pour toutes les pompes concernées dans le circuit complet de granulation (recirculation, décantation, refroidissement, ...)

Toutefois, étant donné que, jusqu'à présent, il n'était pas possible de régler le débit de l'eau de granulation en fonction du débit du laitier ou que les complications techniques pour effectuer un tel réglage ne justifiaient pas les économies réalisables, on s'est contenté, bon gré mal gré, des inconvénients précités entraînés par un débit maximal de l'eau de granulation.

Le but de la présente invention est de prévoir un procédé amélioré de granulation de laitier qui permet d'éliminer les inconvénients décrits ci-dessus, autrement dit, un procédé qui permet, entre autres, de réaliser une économie aussi bien de consommation d'eau qu'énergétique.

Pour atteindre cet objectif, la présente invention prévoit un procédé de granulation de laitier, du genre décrit dans le préambule, qui est essentiellement caractérisé en ce que l'on mesure la force nécessaire à la rotation du tambour et que l'on détermine à partir de cette force le poids du laitier granulé et le débit du laitier en fusion et en ce que l'on règle le débit de l'eau en fonction du débit du laitier en fusion ainsi déterminé.

Alors que jusqu'à présent il n'existait pas de moyens de mesure pouvant fournir une mesure exacte et fiable du débit de laitier, la présente invention permet d'obtenir cette information, sans sondes ou instruments de mesure sophistiqués, et ceci tout simplement en exploitant à fond les possibilités offertes par une installation de filtration à tambour rotatif telle que proposée dans le brevet US 4 204 855.

Le réglage du débit consiste en ce que le débit d'au moins un courant d'eau est maintenu constant, en ce que ce débit constant est déterminé de manière à suffire à la granulation du courant de laitier lorsque le débit de celui-ci est inférieur à son débit maximal, en ce que le débit d'au moins un autre courant d'eau est variable entre zéro ou une valeur minimale et une valeur telle que la somme des débits de tous les courants d'eau sous pression suffisent à la granulation du courant de laitier lorsque le débit de celui-ci est maximal, et en ce que l'on fait varier automatiquement le débit du ou des courants à débit variable en fonction des mesures du débit du laitier.

Le réglage du débit d'eau est effectué dans un premier mode de mise en œuvre sur le courant d'eau supérieur, c'est-à-dire celui qui se trouve le plus près en-dessous de la chute de laitier en fusion, car le rendement de ce courant d'eau sur la dispersion du laitier est à cet endroit maximal.

Selon un mode de réalisation préféré, il est prévu trois courants d'eau sous pression superposés, le courant du milieu pouvant être constant ou réglable.

Ce mode d'exécution est donc caractérisé par le fait que le débit et la pression d'un ou de plusieurs courants sont constants alors que le débit et la pression d'un ou de plusieurs autres courants sont variables.

Selon un autre mode d'exécution la pression du courant à débit variable est maintenue constante. Dans la forme la plus simple de ce mode d'exécution un courant d'eau est simplement fermé ou ouvert alors que dans une autre forme d'exécution le débit d'un courant d'eau est variable progressivement entre une valeur minimale et une valeur maximale.

L'invention prévoit également une installation de mise en œuvre de ce procédé comprenant des moyens pour produire des courants d'eau sous pression superposés et projeter ces courants contre le laitier tombant sensiblement verticalement de l'extrémité d'une rigole, une goulotte d'écoulement pour l'évacuation du laitier et de l'eau, une chambre alimentée en eau sous pression dont la paroi frontale (42) comporte des fentes et des perforations engendrant lesdits courants d'eau, une installation de filtration et séparation d'eau du laitier granulé, cette installation comprenant un tambour filtrant rotatif tournant autour d'un axe horizontal garni intérieurement de godets de filtration plongeant, lors de la rotation du tambour dans la pulpe et entraînant le laitier granulé vers le sommet pour le déverser sur une bande d'évacuation caractérisée par des moyens de détection pour mesurer la force nécessaire à la rotation du tambour filtrant et engendrer des signaux représentatifs du débit du laitier en fusion et par des moyens pour régler le débit de l'eau de granulation en fonction desdits signaux.

Selon un premier mode de réalisation ladite chambre est divisée en plusieurs compartiments superposés séparés les uns des autres et comprend des moyens pour régler progressivement le débit de l'eau éjectée à travers le compartiment supérieur entre une valeur minimale et une valeur maximale.

Selon un autre mode de réalisation ladite chambre est divisée en deux compartiments indépendants communiquant chacune avec une conduite d'alimentation en eau de granulation et dans lesquelles règnent des pressions égales.

Selon un autre mode de réalisation il est prévu à l'intérieur de la chambre un clapet pourvu d'un certain nombre de perforations en alignement sur les perforations correspondantes de la paroi frontale de la chambre et en nombre inférieur à ces dernières, ce clapet étant déplaçable entre position ouverte à débit maximal et une position rabattue à débit minimal dans laquelle un certain nombre de perforation de la paroi frontale sont masquées. Pour assurer une pression constante quelle que soit la position du clapet, le régime des pompes est modifié automatiquement selon la position du clapet.

Dans la version la plus simple, il s'agit d'un clapet pivotant pouvant être rabattu contre et écarté de la paroi frontale de la chambre.

Dans une version plus compliquée, le clapet est en forme de vanne coulissant le long de la paroi frontale.

D'autres particularités et caractéristiques ressortiront de la description détaillée de quelques modes de réalisation et d'exemples de mise en œuvre présentés ci-dessous à titre d'illustration, en référence aux figures annexées dans lesquelles :

La figure 1 montre une courbe représentant la relation entre la quantité et la pression de l'eau de granulation injectée dans l'espace de granulation,

la figure 2 montre schématiquement un premier mode de réalisation à plaques frontales perforées à travers lesquelles les différents courants d'eau sont injectés dans l'espace de granulation,

les figures 3 et 4 montrent schématiquement une coupe verticale respectivement une coupe horizontale d'un deuxième mode de réalisation ;

la figure 5 montre une vue frontale de ce deuxième mode de réalisation ;

la figure 6 montre schématiquement une coupe verticale à travers un troisième mode de réalisation ;

la figure 7 montre une vue frontale du troisième mode de réalisation ;

les figures 8 et 9 montrent respectivement une coupe verticale et une coupe horizontale d'une variante du troisième mode de réalisation et

la figure 10 montre une vue frontale de cette variante.

L'idée de base de l'invention est la mesure du débit de laitier grâce à l'installation de filtration à tambour rotatif et l'utilisation du résultat de ces mesures pour le réglage du débit de l'eau. L'installation de filtration à tambour ne sera plus décrite en détail ici, ceci ayant été l'objet du brevet US-4 204 855 auquel le lecteur voudra bien se référer pour des explications détaillées supplémentaires.

Qu'il soit dit simplement quel que soit le moyen d'entraînement du tambour il est toujours possible de mesurer par des moyens connus en soi la force nécessaire à la rotation du tambour.

Si par exemple, le tambour est animé par voie hydraulique, il suffit de mesurer la pression de l'huile, ce qui donne à tout moment une indication du poids du laitier granulé et par conséquent du débit du laitier en fusion. C'est cette indication que l'invention se propose d'utiliser pour modifier le débit de l'eau de granulation et selon un mode d'exécution de maintenir constant le rapport quantité eau/quantité de laitier.

Un premier mode de mise en œuvre sera décrit en référence à l'application dans une installation telle que proposée par la demande de brevet européen précitée N° 0 043 605. Qu'il soit rappelé ici que cette demande de brevet propose une installation de granulation de laitier dans un pot de granulation comprenant des moyens pour produire un courant d'eau sous pression et projeter ce courant contre le laitier tombant sensiblement verticalement de l'extrémité d'une rigole, une goulotte d'écoulement aménagée dans le prolongement du courant d'eau pour l'évacuation du laitier et de l'eau, ce courant d'eau étant constitué d'une multitude de petits jets d'eau engendrées par le passage à travers des perforations de la paroi frontale d'une chambre alimentée en eau sous pression, cette chambre étant divisée en deux et comprenant un compartiment supérieur et un compartiment inférieur séparés par une cloison longitudinale et reliée à deux conduites d'admission d'eau sous pression séparées. On se référera avantageusement à cette demande de brevet pour des détails supplémentaires.

Il est connu également, d'après les lois hydrauliques, que dans une conduite d'eau, à écoulement laminaire, et pour un indice de Reynold faible, la pression est proportionnelle au carré de la vitesse de l'eau. Lorsqu'il se produit des turbulences, la proportionnalité est encore supérieure à celle du carré.

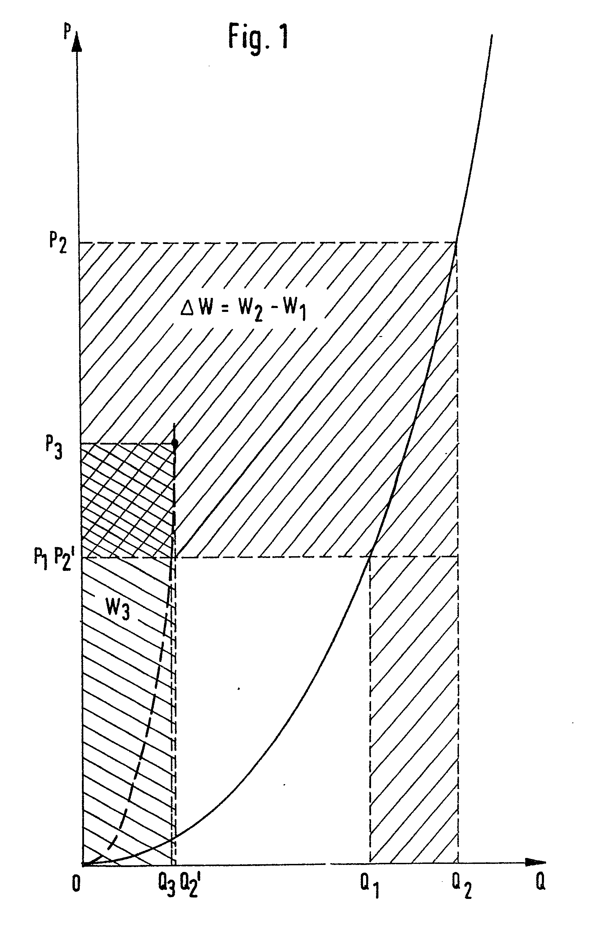

La figure 1 représente cette relation. Toutefois, au lieu d'exprimer la pression en fonction de la vitesse, on a indiqué la quantité, ce qui ne change pas la forme de la courbe, étant donné que la quantité est directement fonction de la vitesse.

Sur cette figure 1, on a représenté par $Q_1$ le débit d'eau nécessaire à une granulation optimale du laitier lorsque le débit de celui-ci est faible. La pression correspondant à ce débit a été représentée par $P_1$. En supposant que l'on veuille régler le débit de l'eau de granulation en fonction du débit du laitier et qu'il faille un débit de $Q_2$ pour une granulation optimale du laitier lorsque le débit de celui-ci est maximal, il faudrait augmenter la pression de l'eau de $P_1$ à $P_2$ pour arriver au débit $Q_2$. Comme le montre la courbe de la figure 1, cette augmentation se situe dans la portion raide de la courbe et implique une augmentation considérable de la pression. Cette augmentation de la pression devrait être réalisée au niveau des pompes, pour toute la quantité d'eau véhiculée, ce qui constitue une consommation d'énergie supplémentaire non rentable et représentée par $W = W_2 - W_1$ et où

$$W_1 = k \times P_1 \times Q_1$$

$$k = \text{constante}$$

$$W_2 = k \times P_2 \times Q_2$$

W est visualisé par la surface hachurée.

Par contre, en utilisant, comme le propose la présente invention, une source d'eau séparée servant uniquement au réglage pour adapter la quantité d'eau aux fluctuations du débit de laitier, cette source ne serait pas opérative en cas de nécessité d'un débit d'eau correspondant à $Q_1$. Autrement dit, pour injecter à travers cette source d'appoint le supplément d'eau correspondant à la différence entre $Q_2$ et $Q_1$, il faudrait augmenter à $Q_2$ le débit de cette source passant à travers un autre orifice et de ce fait caractérisé par une autre courbe et élever sa pression à $P'_2$.

Afin de mieux faire apparaître les gains ainsi réalisés, on a hachuré sur la fig. 1 les surfaces correspondantes aux consommations d'énergie des deux cas. La différence entre les surfaces est une preuve des gains d'énergie consommée réalisables grâce au procédé proposé par l'invention.

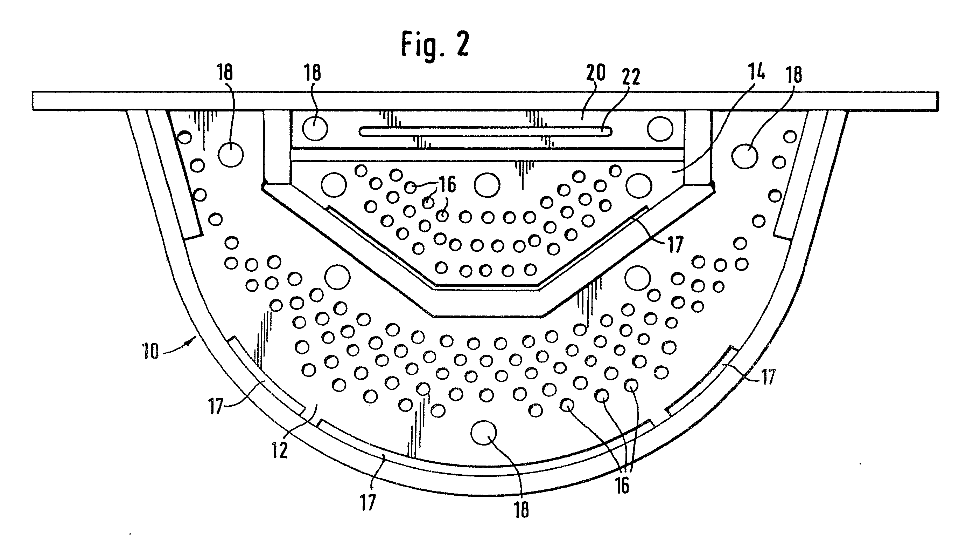

La fig. 2 montre la paroi frontale 10 d'une boîte de granulation à travers laquelle est injectée de l'eau sous pression contre un courant de laitier comme dans la demande de brevet européen N° 0 043 605. L'eau de granulation est introduite à travers deux chambres séparées fermées respectivement par des plaques 12 et 14. Chacune de ces plaques 12 et 14 est pourvue d'une multitude d'orifices 16 et des fentes 17, pour diviser chacun des courants en une multitude de jets d'eau sous pression. La référence 18 désigne des moyens ou des fixations amovibles des plaques 12 et 14. Le débit total de l'eau injectée à travers ces deux plaques 12 et 14 correspond au débit Q de la figure 1, c'est-à-dire au débit nécessaire à la granulation du laitier lorsque le débit de celui-ci est faible. Conformément à la présente invention, il est prévu une source d'appoint constituée par une troisième chambre, non montrée, séparée des deux autres, et fermée par une plaque frontale 20 pourvue d'une fente transversale, très mince 22, s'étendant sur toute la largeur possible du courant de laitier. C'est à travers cette fente 22 que l'on injecte une quantité variable d'eau sous pression pouvant varier entre le débit zéro et le débit maximum $Q'_2$ correspondant à l'augmentation $Q_2 - Q_1$ nécessaire en cas de variation du débit du courant de laitier.

Il est préférable que cette source d'appoint soit située au-dessus des deux autres, c'est-à-dire le plus haut possible, afin d'avoir une action optimale sur le laitier. En effet, il ne faut pas que le laitier, sous l'effet de son poids, accumule une force suffisante pour traverser les jets d'eau sans être dévié par ceux-ci. Par conséquent, en plaçant le jet supérieur à un niveau suffisamment élevé, le laitier n'aura pas accumulé la force suffisante pour traverser ce jet. Autrement dit, le jet de cette source d'appoint dévie déjà le courant de laitier dans la direction d'évacuation, de sorte qu'il se présente favorablement au courant d'eau inférieur.

L'une des particularités essentielles de cette paroi frontale est donc que la forme des fentes et des perforations est telle que le passage du fluide se fait avec une perte de charge optimale en vue de la formation des jets bien concentrés à l'endroit voulu, c'est-à-dire principalement concentrés en-dessous de la trajectoire du courant de laitier en fusion et le long des parois de la rigole d'évacuation.

Dans la demande de brevet européen précitée N° 0 043 605, le courant d'eau inférieur servait essentiellement à l'évacuation de laitier, tandis que le courant d'eau supérieur intervenait essentiellement dans le processus de granulation. Quant à l'eau de la source d'appoint de la présente invention, celle-ci intervient exclusivement dans le processus de granulation et ceci de manière avantageuse. En effet, sous l'action du jet d'eau de cette source d'appoint, le courant de laitier se désintègre en petites particules ou boulets, c'est-à-dire une consistance idéale en vue de la granulation et du refroidissement par les courants inférieurs. Par conséquent, l'invention apporte, en outre, une contribution favorable au processus de granulation et de vitrification.

Comme mentionné dans la demande de brevet européen N° 0 043 605, il est possible d'intervenir par une variation de la température de l'eau de granulation sur la consistance et la forme du produit granulé. Ces possibilités sont encore augmentées par ce premier mode de mise en œuvre de l'invention, grâce au troisième courant d'eau, étant donné qu'on peut prévoir des températures différentes pour les trois courants d'eau.

Si l'application du produit fini le demande, il est notamment avantageux de prévoir de l'eau, à température ambiante, étant donné que, dans ce cas, on réalise une meilleure vitrification du laitier. Ceci est avantageux d'un autre point de vue, étant donné qu'on peut prévoir, pour les courants inférieurs, à débit constant, rien que de l'eau recyclée, par exemple, à une température d'environ 50 à 70 °C. L'eau de la source d'appoint serait alors de l'eau qu'on ajoute dans le processus pour compenser la consommation de l'eau, consommation s'élevant normalement à environ 15 à 20 % de la totalité de l'eau.

Les essais sur un prototype ont montré qu'il est possible de granuler un débit de laitier de 120 à 360 tonnes à l'heure dans des conditions optimales avec un débit constant des deux courants inférieurs de 1 200 m³ d'eau à l'heure. Le débit de la source supérieure d'appoint varie entre zéro et 250 m³ à l'heure, ce qui constitut une consommation totale en eau de granulation de 1 200 à 1 450 m³ à l'heure. Ceci constitue un gain appréciable si on tient compte que la plus grande partie de cette eau est injectée sous des pressions moyennes et que, d'un autre côté, la consommation en eau de granulation dans les installations de granulation conventionnelles atteint environ 2 000 m³ à l'heure avec des pressions beaucoup plus élevées. Quant au gain d'énergie sur les frais de pompage tel que expliqué en référence à la fig. 1, il s'élève à 35 à 50 % de l'énergie totale consommée et ceci pour une qualité optimale du laitier granulé.

Pour les hauts fourneaux à grande capacité, ou lorsque le débit du laitier subit des fluctuations très importantes, il est possible de prévoir une deuxième source d'appoint à débit réglable, c'est-à-dire dans l'exemple représenté, un quatrième courant d'eau. Il est également possible de ne prévoir qu'un débit constant pour le courant inférieur, et de régler le débit traversant la plaque 14 et le débit de l'eau traversant la fente 22, chacun entre zéro ou une valeur minimale et une valeur déterminée nécessaire à la granulation d'une quantité maximale de laitier.

Comme le montre nettement la fig. 1, une variation du débit entraîne également une variation de la pression. Or, dans l'intérêt d'une optimalisation des conditions de granulation et de la régularité du produit fini il peut être souhaitable de ne pas modifier la pression durant le processus de granulation. Comme le montre le graphique de la fig. 1, ceci est possible, notamment en renonçant à la variation continue du débit. Si l'on veut opérer constamment à la pression $P_1$, soit la source d'appoint doit être fermée (débit zéro), la pression des autres courants restant $P_1$ soit ouverte de telle manière que les débits correspondent à la pression $P_1$, c'est-à-dire soient égaux à $Q_3$.

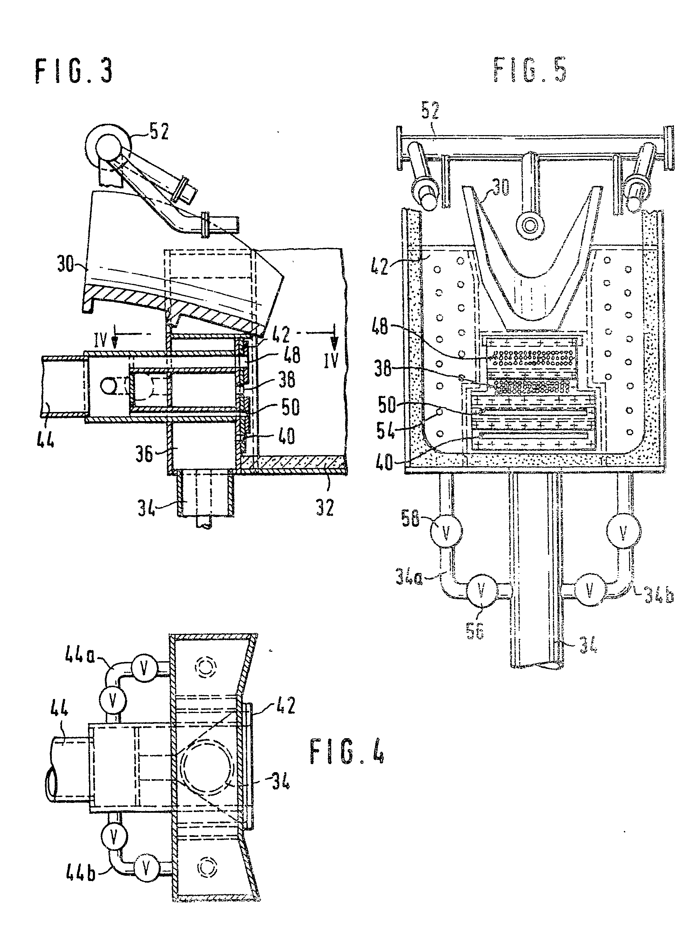

Les fig. 3 à 5 illustrent un mode de réalisation avec une source d'appoint qui est soit ouverte, soit fermée, suivant que le débit du laitier en fusion est élevé ou faible. Dans ce mode de réalisation, le laitier en fusion tombe d'une rigole de coulée 30 vers une goulotte d'écoulement 32 et lors de cette chute le laitier est soumis à l'action de plusieurs jets d'eau.

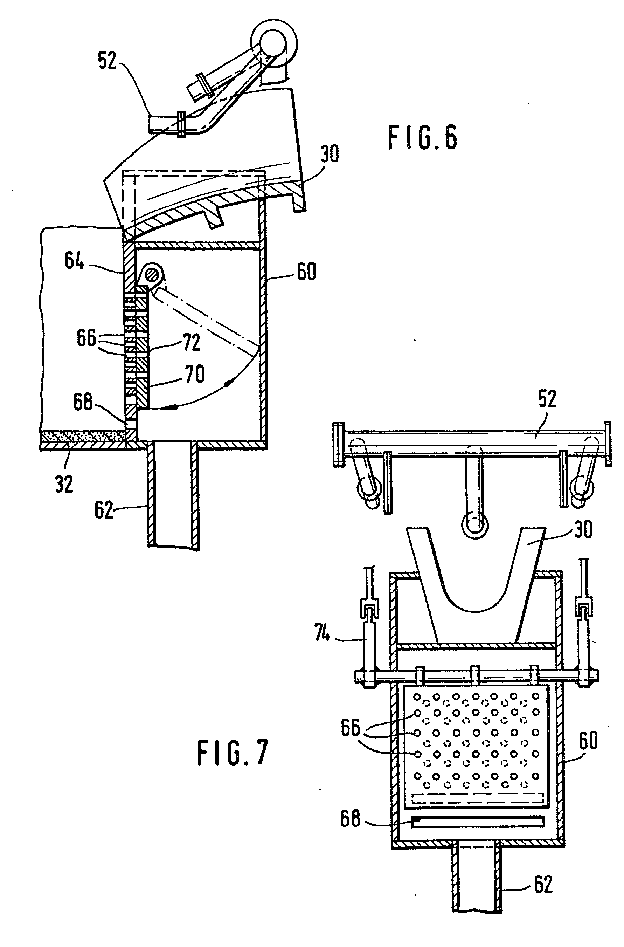

Un courant d'eau sous pression est pompé à travers une conduite d'alimentation 34 dans une chambre 36 dont la plaque frontale 42, bien visible sur la fig. 5, est pourvue d'ouvertures et de fentes de sortie de l'eau. Dans l'exemple représenté, l'eau est ejecté de la chambre 36 à travers une fente horizontale 40 et une série de perforations 38. L'eau ejecté à travers la fente 40 sert essentiellement à l'évacuation du laitier, tandis que les jets d'eau formés par les ouvertures 38 servent essentiellement à la granulation du laitier en fusion.

Une source d'appoint est branchée à travers une seconde conduite d'alimentation 44 qui, au niveau de la plaque frontale 42 se divise en deux branches pour éjecter de l'eau d'évacuation à travers une fente 50 et de l'eau de granulation à travers d'une série d'ouvertures 48. La pression dans les deux conduites d'alimentation 34 et 44 est la même de sorte que l'on opère toujours à la même pression pendant le processus de granulation, que la source d'appoint 44 soit débranchée lorsque le débit du laitier est faible ou qu'elle soit en service lorsque le débit du laitier est élevé.

Etant donné que les fonctions de granulation du laitier et d'évacuation de la pulpe sont séparées grâce à la disposition des ouvertures de sortie de l'eau à travers la plaque frontale 42, il est possible de prévoir pour l'alimentation principale 34 et l'alimentation d'appoint 44 deux conduites séparées, ce qui permet d'utiliser pour la granulation et l'évacuation des eaux à des températures différentes et des eaux d'origines différentes.

En dehors de l'eau d'évacuation et de granulation on forme, au moyen des gicleurs 52 au-dessus de l'espace de granulation une nappe d'eau afin de favoriser la condensation des vapeurs montantes et d'éviter que celles-ci ne se répandent dans le hall de coulée.

En outre, la plaque frontale 42 est pourvue de deux séries latérales de perforation 54 à travers lesquelles on injecte de l'eau de rinçage dans l'espace de granulation. A cet effet aussi bien la conduite principale 34 que la conduite d'appoint 44 sont connectées par des conduites auxiliaires 34a, 34b respectivement 44a, 44b à des chambres latérales aménagées derrières les perforations 54 de la plaque frontale 42. Chacune de ces conduites 34a, 34b, 44a, 44b comporte une vanne 56 pour la mise en service ou le débranchement de ces connections latérales ainsi qu'un clapet anti-retour 58 afin que l'eau du circuit principal 34 ne soit pas mélangée avec celle du circuit d'appoint 44 et vice versa.

Le graphique de la figure 1 montre la relation entre la quantité et la pression pour une section ou ouverture d'écoulement bien particulière. Pour une ouverture différente ce graphique sera différent, c.-à-d. que la courbe pourra être plus raide ou plus aplatie. Ceci veut dire qu'il est possible de modifier le débit tout en maintenant la même pression mais à condition de modifier les conditions d'écoulement. C'est ce principe qui est appliqué dans le mode de réalisation des figures 6 et 7 pour lesquelles les chiffres de références repris du mode de réalisation des figures 3 à 5 représentent les mêmes éléments.

Dans ce deuxième mode de réalisation de l'eau sous pression est pompée à travers une conduite d'alimentation 62 dans une chambre 60 dont la plaque frontale 64 comporte une ou plusieurs fentes horizontales 68 pour former un jet d'évacuation de la pulpe et une multitude de perforations 66 pour former des jets de granulation du laitier. La particularité de ce mode de réalisation est qu'il est prévu dans la chambre 60 un clapet pivotant 70 également pourvu d'un certain nombre de perforations 72 disposées en alignement sur les perforations correspondantes 66 de la plaque frontale 64. Toutefois, le nombre de perforations 72 de la plaque 70 est inférieur, par exemple de moitié au nombre de perforations 66 de sorte que, en position fermée du clapet 70, comme montré en trait plein sur la figure 6, un certain nombre de perforations 66 sont masquées. Autrement dit, en position fermée du clapet 70 ce sont les perforations 72 qui sont déterminantes pour le débit d'écoulement de l'eau à travers la plaque 64, alors qu'en position ouverte du clapet 70, comme montré en traits interrompus sur la figure 6 ce sont les perforations 66 qui sont déterminantes pour le débit. Par conséquent, en position ouverte du clapet 70 le débit est maximal, alors qu'en position fermée le débit est minimal.

Pour éviter un changement de pression de l'eau de granulation lors de la manœuvre du clapet 70 le régime des pompes amenant l'eau à travers la conduite 62 dans la chambre 60 doit être modifié, c.-à-d. que le régime des pompes doit être augmenté lorsque le clapet est ouvert et être réduit lorsque le clapet est fermé.

La manœuvre du clapet 70 peut être effectué simplement comme montré schématiquement par la figure 7, au moyen d'une tringlerie 74 actionnée, p. exemple, au moyen d'un cylindre pneumatique non représenté. Il est bien entendu possible de raccorder le moyen d'entraînement du clapet à celui des pompes de manière que la manœuvre du clapet modifie automatiquement le régime des pompes afin de pouvoir opérer à une pression de granulation constante.

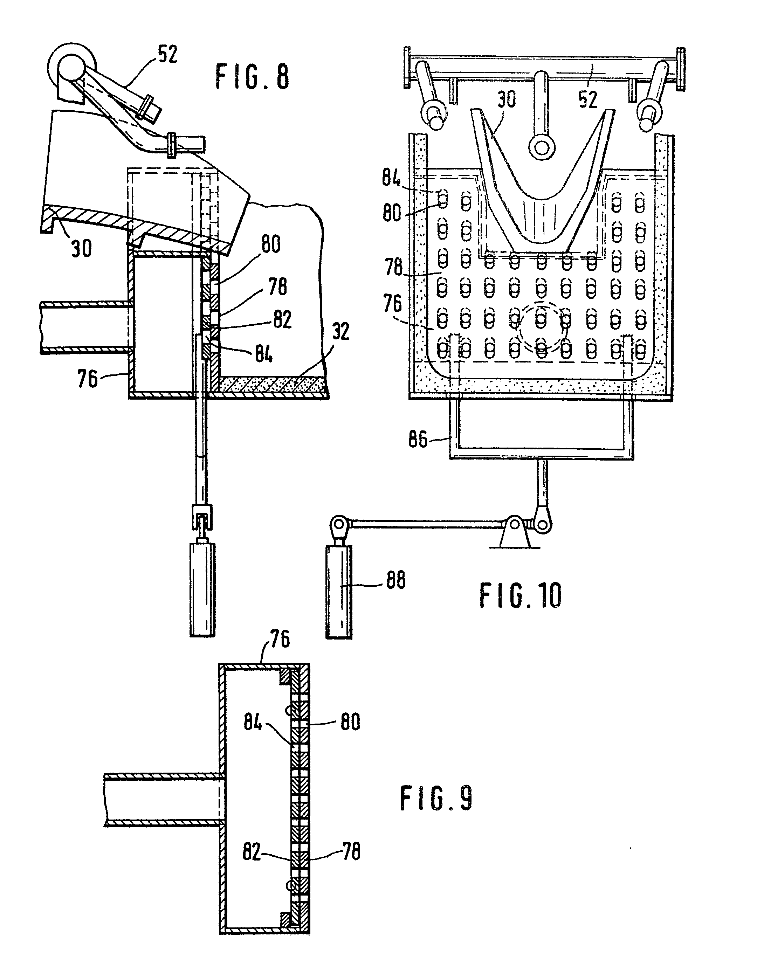

Alors que le mode de réalisation des figures 6 et 7 ne permet que d'opérer avec deux valeurs bien déterminées du débit d'eau de granulation, la variante de ce mode de réalisation montrée schématiquement par les figures 8 à 10 permet une variation continuelle du débit entre une valeur maximale et une valeur minimale.

Dans ce mode de réalisation la paroi frontale 78 de la chambre 76 comporte également une multitude de perforations 80 qui, comme le montre la figure 10, ont une forme allongée. A l'intérieur de la chambre 76 se trouve une vanne coulissante constituée d'une plaque 82 juxtaposée à la paroi 78 et comportant des ouvertures 84 analogues aux ouvertures 80 disposées de manière à être en alignement sur ces dernières dans une position déterminée de la plaque 82. Cette plaque 82 peut coulisser verticalement sous l'action d'une tringlerie 86 et d'un moyen d'entraînement approprié, tel que, par exemple, un vérin pneumatique 88. Comme le laisse reconnaître la figure 10, le déplacement de la vanne provoque une superposition plus ou moins grande des ouvertures 80 et 84 ce qui permet de modifier, de façon continue, le débit de l'eau traversant la paroi frontale 78. La disposition peut être telle que, en position ouverte, toutes les ouvertures 80 et 84 soient en alignement parfait de sorte que le débit soit maximal et qu'en position fermée, les ouvertures 80 et 84 se masquent mutuellement de moitié de sorte que le débit soit réduit à 50 % du débit maximal.

Comme dans le mode de réalisation des figures 6 et 7, le déplacement de la vanne coulissante 82 doit être coordonné avec le régime des pompes pour opérer à une pression de granulation constante.

**Revendications**

1. Procédé de granulation liquide de laitier, consistant à faire tomber le laitier en fusion dans une enceinte de granulation dans laquelle on injecte de l'eau sous pression, sous forme de plusieurs courants superposés et duquel on évacue la pulpe composée de laitier granulé et d'eau vers une installation de filtration et séparation d'eau du laitier granulé, cette installation comprenant un tambour filtrant rotatif tournant autour d'un axe horizontal garni intérieurement de godets de filtration plongeant, lors de la rotation du tambour dans la pulpe et entraînant le laitier granulé vers le sommet pour le déverser sur une bande d'évacuation, caractérisé en ce que l'on mesure la force nécessaire à la rotation du tambour et que l'on détermine à partir de cette force le poids du laitier granulé et le débit du laitier en fusion et en ce que l'on règle le débit de l'eau en fonction du débit du laitier en fusion ainsi déterminé.

2. Procédé selon la revendication 1, caractérisé en ce que le réglage du débit consiste en ce que le débit d'au moins un courant d'eau est maintenu constant, en ce que ce débit constant est déterminé de manière à suffire à la granulation du courant de laitier lorsque le débit de celui-ci est inférieur à son débit maximal, en ce que le débit d'au moins un autre courant d'eau est variable entre zéro ou une valeur minimale et une valeur telle que la somme des débits de tous les courants d'eau sous pression suffisent à la granulation du courant de laitier lorsque le débit de celui-ci est maximal, et en ce que l'on fait varier automatiquement le débit du ou des courants à débit variable en fonction des mesures du débit du laitier.

3. Procédé selon la revendication 2, caractérisé en ce que l'on effectue le réglage du débit d'eau sur le courant d'eau supérieur.

4. Procédé selon l'une quelconque des revendications 2 ou 3, caractérisé en ce que l'on prévoit trois courants d'eau sous pression superposés et séparés.

5. Procédé selon la revendication 4, caractérisé en ce que le débit du courant central et le débit du courant inférieur sont maintenus constants.

6. Procédé selon la revendication 4, caractérisé en ce que l'on règle le débit du courant central et le débit du courant supérieur.

7. Procédé selon l'une quelconque des revendications 2 à 6, caractérisé en ce que l'eau du ou des courants à débit réglable est de l'eau ajoutée à température ambiante tandis que l'eau du ou des courants à débit constant est de l'eau recyclée à une température de 40° à 90 °C.

8. Procédé selon l'une quelconque des revendications 2 à 7 caractérisé en ce que l'on fait varier la pression des courants à débit réglable en même temps que le débit.

9. Procédé selon l'une quelconque des revendications 2 à 7, caractérisé en ce que la pression des courants d'eau est maintenue constante quel que soit leur débit.

10. Procédé selon la revendication 9, caractérisé en ce que le circuit à débit variable est fermé ou ouvert suivant le débit de laitier.

11. Procédé selon la revendication 9, caractérisé en ce que le circuit à débit variable est adapté continuellement à la variation du débit de laitier avec adaptation correspondante du régime des pompes d'alimentation en eau.

12. Installation de granulation de laitier comprenant des moyens pour produire des courants d'eau sous pression superposés et projeter ces courants contre le laitier tombant sensiblement verticalement de l'extrémité d'une rigole, une goulotte d'écoulement pour l'évacuation du laitier et de l'eau, une chambre alimentée en eau sous pression dont la paroi frontale (42) comporte des fentes et des perforations engendrant lesdits courants d'eau, une installation de filtration et séparation d'eau du laitier granulé, cette installation comprenant un tambour filtrant rotatif tournant autour d'un axe horizontal garni intérieurement de godets de filtration plongeant, lors de la rotation du tambour, dans la pulpe et entraînant le laitier granulé vers le sommet pour le déverser sur une bande d'évacuation, caractérisé par des moyens de détection pour mesurer la force nécessaire à la rotation du tambour filtrant et engendrer en fonction de ladite mesure des signaux représentatifs du débit du laitier en fusion et par des moyens pour régler le débit de l'eau de granulation en fonction desdits signaux.

13. Installation selon la revendication 12 caractérisé en ce que la chambre est divisée en plusieurs compartiments superposés séparés les uns des autres et comprend des moyens pour régler progressivement le débit de l'eau éjectée à travers le compartiment supérieur entre une valeur minimale et une valeur maximale.

14. Installation selon la revendication 12, caractérisé en ce que ladite chambre est divisée en deux compartiments indépendants communiquant chacune avec une conduite d'alimentation (34, 44) en eau de granulation et dans lesquelles règnent des pressions égales.

15. Installation selon la revendication 12 caractérisé par un clapet (70, 82) prévu à l'intérieur de la chambre et pourvu d'un certain nombre de perforations (72, 84) en alignement sur les perforations correspondantes (66, 80) de la paroi frontale (64, 78) de la chambre (60, 76) et en nombre inférieur à ces dernières, ce clapet (70, 82) étant déplaçable entre une position ouverte à débit maximal et une position rabattue à débit minimal dans laquelle un certain nombre de perforations de la paroi frontale sont masquées.

16. Installation selon la revendication 16, caractérisé en ce que le clapet est un clapet pivotant (70) pouvant être rabattu contre et écarté de la paroi frontale (64) de la chambre (60).

17. Installation selon la revendication 15, caractérisé en ce que le clapet est en forme de vanne (82) coulissant le long de la paroi frontale (78).

**Claims**

1. Process for the liquid granulation of slag, in which the slag in a molten state is caused to drop into a granulation enclosure into which water is injected under pressure in the form of a number of superimposed currents and from which the slurry consisting of granulated slag and water is evacuated to an installation for filtration and separation of the water from the granulated slag, this installation comprising a rotary filter drum which rotates about a honrizontal axis and which is fitted internally with filtration buckets which during the rotation of the drum are immersed in the slurry and carry the granulated slag upwards in order to discharge it onto an evacuted belt, characterized in that the force required for the rotation of the drum is measured and the weight of the granulated slag and the output of molten slag are determined on the basis of the said force, the output of water being regulated in accordance with the output of molten slag determined in this way.

2. Process in accordance with Claim 1, characterized in that the rate of flow is regulated by keeping at least one current of water constant, this constant rate of flow being selected in such a way as to suffice for the granulation of the current of slag when the output of this latter is below the maximum, while the rate of flow of at least one other current of water varies between zero or a certain minimum and a value such that the sum of the rates of flow of all the currents of water under pressure suffices for the granulation of the current of slag when the output of this latter is at its maximum, the rate of flow of the variable current or currents being automatically varied in accordance with the slag flow measurements obtained.

3. Process in accordance with Claim 2, characterized in that the operation of regulating the rate of flow of water in carried out on the upper current of water.

4. Process in accordance with anyone of Claims 2 or 3, characterized in that three superimposed and separate currents of water are provided.

5. Process in accordance with Claim 4, characterized in that the rate of flow of the central current and that of the lower current are kept constant.

6. Process in accordance with Claim 4, characterized in that the rate of flow of the central current and that of the upper current are adjusted.

7. Process in accordance with anyone of Claims 2 to 6, characterized in that the water of the current or currents of which the rate of flow is adjustable consists of added water at ambient temperature, while the water of the current or currents of which the rate of flow is constant consists of recycled water at a temperature of 40-90 ºC.

8. Process in accordance with anonyme of Claims 2 to 7, characterized in that the pressure of the currents of which the rate of flow is adjustable is varied at the same time as the rate of flow.

9. Process in accordance with anyone of Claims 2 to 7, characterized in that the pressure of the currents of water is maintained constant regardless of the rate of flow.

10. Process in accordance with Claim 9, characterized in that the circuit with a variable rate of flow is closed or opened according with the rate of flow of the slag.

11. Process in accordance with Claim 9, characterized in that the circuit with a variable rate of flow is continually adapted to the variation in the rate of flow of the slag, the operating conditions of the water supplying pumps being adapted accordingly.

12. Installation for the granulation of slag, comprising means for the production of superposed currents of water under pressure and for the projection of these currents against the slag falling in an approximately vertical direction from the end of a channel, a delivery spout for the evacuation of the slag and the water, a chamber supplied with water under pressure, the front plate (42) of which comprising slits or apertures forming said currents of water, an installation for filtration and separation of water from the granulated slag, this installation comprising a rotary filter drum rotating about a horizontal axis and fitted internally with filtration buckets which during the rotation of the drum are immersed in the slurry and carry the granulated slag to the top in order to discharge it onto an evacuation belt, characterized by detection means for measuring the force required for the rotation of the filter drum and producing, in accordance with said measuring, signals representing the output of molten slag and means for regulating the rate of flow of the granulation water in accordance with the said signals.

13. Installation in accordance with Claim 12, characterized in that the chamber is subdivided into a number of superimposed compartments separated from one another, and comprising means for progressively adjusting the flow of water expelled through the upper compartment between a minimum and a maximum.

14. Installation in accordance with Claim 12, characterized in that the said chamber is subdivided into two independent compartments, each communicating with a feed pipe (34, 44), for granulation water, equal pressures prevailing in the said chambers.

15. Installation in accordance with Claim 12, characterized by a valve (70, 82), mounted inside the chamber and provided with a certain number of perforations (72, 84), aligned with the corresponding perforations (66, 80) of the front wall (64, 78), of the chamber (70, 76), and fewer in number than these latter, the said valve (70, 82), being displaceable between an open position giving a maximum rate of flow and a closed position which results in a minium rate of flow and in which a certain number of perforations in the front wall are masked.

16. Installation in accordance with Claim 15, characterized in that the valve consists of a swivel valve (70) which can be turned back against and moved away from the front wall (64) of the chamber (60).

17. Installation in accordance with Claim 15, characterized in that the valve takes the form of a slide valve (82) sliding along the front wall (78).

**Patentansprüche**

1. Verfahren zum Flüssiggranulieren von Schlacke, welches darin besteht, die schmelzflüssige Schlacke in einen Granulierbehälter fallenzulassen, in welchen Druckwasser in Form von mehreren übereinanderliegenden Strömen eingespritzt wird und aus welchen das Schlackengranulat/Wasser-Gemisch einer Anlage zur Filterung und zur Trennung von Wasser- und Schlackengranulat zugeführt wird, wobei dies Anlage eine rotative, um eine horizontale Achse drehbare Trommel umfasst, welche innen mit Bechern bestückt ist, die bei der Rotation der Trommel in das Schlackengranulat/Wasser-Gemisch eintauchen und das Schlackengranulat nach oben mitnehmen um es auf ein Austragband auszuschütten, dadurch gekennzeichnet, dass die zur Trommelrotation notwendige Kraft gemessen wird, dass man von dieser Kraft ausgehend das Gewicht des Schlackengranulates und die Zuflussmenge der schmelzflüssigen Schlacke bestimmt, und dass man den Wasserzulauf in Funktion der solcherart bestimmten Zuflussmengen von schmelzflüssiger Schlacke reguliert.

2. Verfahren nach Anspruch 1, dadurch gekennzeichnet, dass die Regulierung des Zulaufes darin besteht, dass die Zulaufmenge mindestens eines Wasserstromes konstant gehalten wird, dass diese konstante Zulaufmengen so bestimmet ist, dass sie für die Granulierung des Schlackenstromes ausreicht, wenn die Durchsatzmenge dieses letzteren kleiner ist als seine maximale Durchsatzmenge, dass die Zuflussmenge mindestens eines anderen Wasserstromes zwischen 0 oder einem Minimalwert und einem Wert variierbar ist, welcher so gross ist, dass die Summe der Zuflussmengen sämtlicher Wasserströme zur Granulierung des Schlackenstromes ausreicht, wenn die Durchsatzmenge dieses letzteren maximal ist, und dass man die Zulaufmenge des oder der Ströme mit variabler Zuflussmenge automatisch in Funktion der Messungen des Schlackendurchsatzes variiert.

3. Verfahren nach Anspruch 2, dadurch gekennzeichnet, dass die Regulierung des Wasserzuflusses am oberen Wasserstrom vorgenommen wird.

4. Verfahren nach einem der Ansprüche 2 und 3, dadurch gekennzeichnet, dass man drei übereinanderliegende und getrennte Druckwasserströme vorsieht.

5. Verfahren nach Anspruch 4, dadurch gekennzeichnet, dass die Zuflussmenge des mittleren Stromes und die Zuflussmenge des unteren Stromes konstant gehalten werden.

6. Verfahren nach Anspruch 4, dadurch gekennzeichnet, dass man die Zuflussmenge des mittleren Stromes und die Zuflussmenge des oberen Stromes reguliert.

7. Verfahren nach einem der Ansprüche 2-6, dadurch gekennzeichnet, dass das Wasser des oder der Ströme mit regelbarer Zuflussmenge Wasser ist, welches mit Umgebungstemperatur zugefügt wird, während das Wasser des oder der Ströme mit konstanter Zuflussmenge wiederaufbereitetes Wasser ist von einer Temperatur von 40° bis 90 °C.

8. Verfahren nach einem der Ansprüche 2-7, dadurch gekennzeichnet, dass gleichzeitig mit der Zuflussmenge der Druck der Ströme mit regelbarer Zuflussmenge variiert wird.

9. Verfahren nach einem der Ansprüche 2-7, dadurch gekennzeichnet, dass der Druck der Wasserströme unabhängig von ihrer Zuflussmenge konstant gehalten wird.

10. Verfahren nach Anspruch 9, dadurch gekennzeichnet, dass der Zulauf mit variabler Zulaufmenge in Abhängigkeit vom Schlackendurchsatz geschlossen oder geöffnet wird.

11. Verfahren nach Anspruch 9, dadurch gekennzeichnet, dass der Zulauf mit regelbarer Zulaufmenge kontinuierlich der Änderung des Schlackendurchsatzes angepasst wird mit entsprechender Anpassung der Speisewasserpumpendrehzahl.

12. Vorrichtung zum Granulieren von Schlacke mit Mitteln zum Erzeugen von übereinanderliegenden Druckwasserströmen und zum Aufschleudern dieser Ströme gegen die im wesentlichen senkrecht aus dem Auslauf einer Rinne fallenden Schlacke, einer Auslaufschurre zum Abführen der Schlacke und des Wassers, einer mit Druckwasser gespeisten Kammer, deren Stirnwand (42) mit Spalten und Perforierungen versehen ist, welche die genannten Wasserströme erzeugen, einer Anlage zum Filtern und zum Trennen des Wassers vom Schlackengranulat, wobei diese Anlage eine rotative, um eine horizontale Achse drehbare Filtertrommel umfasst, welche innen mit Filterbechern bestückt ist, die bei der Rotation der Trommel in das Schlackengranulat/Wasser-Gemisch eintauchen und das Schlackengranulat nach oben mitnehmen um es auf ein Austragband auszuschütten, gekennzeichnet durch Erfassungsmittel zur Messung der zur Rotation der Filtertrommel notwendigen Kraft und zur Erzeugung, in Funktion der genannten Messung, von für die Ausflussmenge der schmelzflüssigen Schlacke representativen Signale, und durch Mittel zum Regulieren des Granulierwasserstromes in Funktion der genannten Signale.

13. Vorrichtung nach Anspruch 12, dadurch gekennzeichnet, dass die Kammer in mehrere übereinanderliegende voneinander getrennte Abteile unterteilt ist und Mittel umfasst, um den durch das obere Abteil ausgestossenen Wasserdurchsatz progressiv zwischen einem Minimal- und einem Maximalwert zu regeln.

14. Vorrichtung nach Anspruch 12, dadurch gekennzeichnet, dass die genannte Kammer in zwei unabhängige Abteile unterteilt ist, welche jeweils mit einer Granulierwasser- Speiseleitung (34, 44) in Verbindung stehen und in welchen gleich grosse Drücke herrschen.

15. Vorrichtung nach Anspruch 12, gekennzeichnet durch eine im Innern der Kammer vorgesehene Klappe (70, 82) welche mit einer bestimmten Anzahl von Perforierungen (72, 84) versehen ist, welche mit entsprechenden Perforierungen (66, 80) mit der Stirnwand (84, 78) der Kammer (60, 76) fluchten und zahlenmässig unterhalb diesem letzteren liegen, wobei dies Klappe (70, 82) zwischen einer offenen Stellung für maximalen Durchsatz und einer heruntergeklappten Stellung für minimalen Durchsatz, in welcher eine bestimmet Anzahl der Perforierungen der Stirnwand abgedeckt sind, bewegt werden kann.

16. Vorrichtung nach Anspruch 16, dadurch gekennzeichnet, dass die Klappe eine Schwenkklappe (70) ist, welche gegen die Stirnwand (64) der Kammer (60) heruntergeklappt und von dieser entfernt werden kann.

17. Vorrichtung nach Anspruch 15, dadurch gekennzeichnet, dass die Klappe als Schieber (82) ausgelegt ist, welcher entlang der Stirnwand (78) verschiebbar ist.

Fig. 1

Fig. 2

FIG.3

FIG.5

FIG.4

FIG.6

FIG.7

FIG. 8

FIG. 9

FIG. 10